# EUROPÄISCHE PATENTSCHRIFT

(11) **EP 2 847 828 B1**
(45) Veröffentlichungstag und Bekanntmachung des Hinweises auf die Patenterteilung: **05.05.2021**
(21) Anmeldenummer: 13708849.8
(22) Anmeldetag: 13.03.2013
(51) Int. Cl.: H01R 9/24, H01R 13/58

(54) **VERTEILDERMODUL UND VERFAHREN ZUM ANSCHLIEßEN VON KABELADERN**
DISTRIBUTOR MODULE AND A METHOD FOR CONNECTING CABLE CORES
MODULE DE DISTRIBUTION ET PROCÉDÉ DE RACCORDEMENT DE BRINS DE CÂBLE

(30) Priorität: 11.05.2012 DE 102012207924
(43) Veröffentlichungstag der Anmeldung: 18.03.2015
(73) Patentinhaber: CommScope Technologies LLC, Hickory, NC 28602 (US)
(72) Erfinder: NEUMETZLER, Heiko, 12623 Berlin (DE); BENEDETTO, Adrian, 12103 Berlin (DE); STRUCK, Detlev, 12209 Berlin (DE)
(74) Vertreter: Patentanwälte Bressel und Partner mbB
(86) Internationale Anmeldenummer: PCT/EP2013/055114
(87) Internationale Veröffentlichungsnummer: WO 2013/167296

(56) Entgegenhaltungen:
- WO-A1-2008/012017
- DE-C1- 3 726 741
- DE-U1-202008 014 699
- GB-A- 2 350 944
- US-A1- 2008 295 330

## Beschreibung

Die Erfindung betrifft ein Verteilermodul und ein Verfahren zum Anschließen von Adern an ein solches Verteilermodul.

Verbindungs- oder Verteilermodule für die Telekommunikations- und Datentechnik sind in verschiedenen Ausführungsformen hinlänglich bekannt. Diese weisen üblicherweise ein Kunststoffgehäuse auf, in dem Aderanschlusskontakte in mindestens einer Reihe entlang der Längsrichtung angeordnet sind. Die Aderanschlusskontakte sind überwiegend als Schneid-Klemm-Kontakte oder als Wire-Wrap-Kontakte ausgebildet. Vorzugsweise sind die Schneid-Klemm-Kontakte im Winkel von 45° zur Längsachse angestellt, sodass diese eine Ader mit dem Draht an zwei in Längsrichtung der Ader versetzten Stellen einschneiden. Wird dann die Ader senkrecht zum Schlitz des Schneid-Klemm-Kontaktes gezogen, so schneiden die Schneidflächen des Schneid-Klemm-Kontaktes sich weiter ein und verhindern ein Lösen der Ader bzw. des Drahtes aus dem Kontakt. Wirken die Zugkräfte hingegen schräg nach oben (im Extremfall senkrecht), so existiert eine Kraftkomponente in Längsrichtung des Kontaktschlitzes des Schneid-Klemm-Kontaktes und es besteht die Gefahr, dass die Ader bzw. der Draht der Ader sich aus dem Kontakt löst. Verschärft wird dieses Problem bei Verbindungs- oder Verteilermodulen, die mit hoher Packungsdichte angeordnet werden und eine kontrollierte Aderführung nur noch bedingt möglich ist.

Aus der DE 20 2008 014 699 U1 ist ein Verbindungsmodul für die Telekommunikations- und Datentechnik mit einem Modulgehäuse bekannt, in welchem zur Verbindung von Adern einer Kabelseite mit Adern einer Rangierseite Kontaktelemente derart angeordnet sind, dass sich an zwei einander abgewandten Längsflächen des Modulgehäuses erstreckende Klemmleisten gebildet sind, wobei das Modulgehäuse in einem Bereich seiner Längserstreckung wenigstens ein Führungsmittel aufweist, welches eine Mehrzahl von Adern zumindest einer der Seiten derart führt, dass die Adern beider Seiten an der gleichen Seitenfläche an die ihnen zugeordneten Klemmleisten geführt sind. Dabei ist das Führungsmittel durch eine Öffnung in dem Modulgehäuse, wenigstens einem Schlitz an dem Modulgehäuse, wenigstens einem an dem Modulgehäuse angeordneten Steg oder einen eine Mehrzahl von Adern einfassenden Bereich des Modulgehäuses gebildet. Dabei ist weiter vorgesehen, dass das wenigstens eine Führungsmittel durch eine Öffnung des Modulgehäuses gebildet ist, die sich bevorzugt in dessen mittleren Bereich befindet und die Kontaktelemente der Klemmleisten sich zu beiden Seiten in Richtung der Längserstreckung des Gehäuses befinden. Nachteilig an dem Verbindungsmodul ist unter anderem die mangelnde Drahtzugsicherung der Adern.

Aus der DE 10 2010 035 179 B3 ist eine Drahtzugsicherung für Verbindungs-oder Verteilermodule für die Telekommunikations- und Datentechnik mit Aderanschlusskontakten bekannt. Dabei wird unter Ader ein Draht mit Kunststoffisolierung verstanden. Die Drahtzugsicherung weist ein Umlenkelement mit einer Kante und mindestens ein Befestigungselement auf, wobei mittels des Befestigungselements die Drahtzugsicherung an einem Verbindungs- oder Verteilermodul befestigbar ist. Im befestigten Zustand verläuft die Kante parallel zur Längsrichtung des Verbindungs- oder Verteilermoduls und senkrecht zu angeschlossenen Adern in den Aderanschlusskontakten. Dabei werden die Adern unter der Kante vom Verbindungs- oder Verteilermodul weggeführt. Wird dann die Ader beispielsweise schräg nach oben über die Kante gezogen, so verläuft die Kraftkomponente parallel zum Kontaktschlitz nicht mehr durch den Kontakt, sondern durch die seitlich versetzte Kante. Hierdurch wird der Draht der Ader zuverlässig gegen ein unabsichtliches Herausziehen geschützt. Das Grundprinzip besteht also darin, mittels des Umlenkelements mit seiner Kante Kraftkomponenten senkrecht zum Draht im Kontakt aus dem Kontakt "umzulenken", sodass diese seitlich versetzt angreifen.

Dabei weist die Kante radiale Einbuchtungen auf. Durch diese Einbuchtungen werden dann die Adern geführt. Die Tiefe der Einbuchtungen ist dabei von der Dicke der Adern abhängig. Vorzugsweise ist die Tiefe der Einbuchtungen derart, dass die durchgeführten Adern wenig Spiel haben, also zwischen Kontakt und Einbuchtung nur wenig oder gar nicht schräg geführt werden können

Die GB2350944 A offenbart ein Verbindungsmodul, bei dem mehradrige Kabel über Kabelordner seitlich oder von unten an Schneidklemmen herangeführt werden, mit denen die einzelnen Adern kontaktiert werden.

Nachteilig an der bekannten Drahtzugsicherung ist, dass aufgrund des notwendigen Zusatzteils der Herstellungs- und Montageaufwand vergrößert ist.

Dabei soll nachfolgend nicht zwischen Verteilermodul und Verbindungsmodul unterschieden werden, vielmehr umfasst der Begriff Verteilermodul auch Verbindungsmodule.

Der Erfindung liegt das technische Problem zugrunde, ein Verteilermodul zu schaffen, bei dem eine verbesserte Drahtführung gewährleistet wird, sowie ein Verfahren zum Anschließen von Adern an ein solches Verteilermodul zur Verfügung zu stellen.

Die Lösung des technischen Problems ergibt sich durch die Gegenstände mit den Merkmalen der Ansprüche 1 und 8. Weitere vorteilhafte Ausgestaltungen der Erfindung ergeben sich aus den Unteransprüchen. Hierzu umfasst das Verteilermodul für die Telekommunikations- und Datentechnik ein Gehäuse aus Kunststoff, in dem Aderanschlusskontakte angeordnet sind, die von mindestens einer Stirnseite des Verteilermoduls beschaltbar sind. In das Gehäuse sind mindestens zwei Umlenkelemente als Drahtzugsicherung integriert, durch die Adern von einer Rückseite zu einer Vorderseite des Verteilermoduls führbar sind. Durch die Integration in das Gehäuse ist die Drahtzugsicherung unverlierbar, wobei durch das Vorsehen von mehreren Umlenkelementen sichergestellt werden kann, dass die Adern relativ dicht bei den Aderanschlusskontakten umgelenkt werden, was günstig hinsichtlich der Kraftumleitung ist. Ein weiterer Vorteil ist, dass dadurch die Adern, die üblicherweise als verdrillte Doppeladern geführt sind, bis kurz vor den Anschlusskontakt verdrillt geführt werden können, was hinsichtlich des Übertragungsverhaltens vorteilhaft ist. Die Aderanschlusskontakte sind dabei vorzugsweise als Schneid-Klemm-Kontakte oder als Wire-Wrap-Kontakte ausgebildet.

Erfindungsgemäß sind die Umlenkelemente zwischen den Aderanschlusskontakten angeordnet. Dies erlaubt sehr kurze Leitungslängen auf der Vorderseite des Verteilermoduls, sodass entsprechend kurz die entdrillten Wege der Doppeladern sind.

Erfindungsgemäß bilden die Aderanschlusskontakte jeweils paarweise zum Anschließen einer Doppelader ein Kontaktpaar, wobei jeweils zwei Kontaktpaaren ein Umlenkelement zugeordnet ist. Dies stellt einen sehr guten Kompromiss zwischen den Anforderungen, einerseits die Wege zu den Aderanschlusskontakten kurz zu halten und andererseits die Gesamtstabilität des Verteilermoduls nicht durch zu viele Umlenkelemente zu reduzieren.

In einer Ausführungsform weist das Umlenkelement eine Offnung auf, die vorzugsweise eine geschlossene Kontur aufweist. Weiter vorzugsweise sind die Ränder der Öffnung abgerundet, um Aderbrüche zu vermeiden.

In einer alternativen Ausführungsform weist das Umlenkelement einen Bügel auf. Der Bügel liegt dabei vorzugsweise zwischen zwei Domen von Aderanschlusskontakten und ist an einer Seite eines Doms fest angebunden und schlägt federn an der Seitenwand des anderen Doms an. Dabei kann der Bügel gedrückt werden, sodass dieser eine Öffnung freigibt, durch die die Adern unter den Bügel geschoben werden. Wird dann der Bügel losgelassen, so federt dieser zurück und verschließt die Öffnung. Der Vorteil gegenüber dem Umlenkelement mit der Öffnung mit geschlossener Kontur ist die Möglichkeit, die Adern von oben in das Umlenkelement einzuführen.

In einer weiteren Ausführungsform weist das Umlenkelement eine geringere Breite als ein benachbarter Dom eines Aderanschlusskontaktes auf. Dadurch wird eine Einbuchtung geschaffen, in der die Adern liegen können und quasi plan mit den Domen abschließen.

In einer weiteren Ausführungsform weisen die Aderanschlusskontakte verschiedener Kontaktpaare einen größeren Abstand auf als die Aderanschlusskontakte eines Kontaktpaares.

In einer weiteren Ausführungsform sind an der Vorderseite stiftförmige Elemente angeordnet, die als Aderführungen dienen.

In einer weiteren Ausführungsform weist das Verteilermodul an sich gegenüberliegenden Stirnseiten Aderanschlusskontakte auf, sodass auf bekannte Weise das Verteilermodul sehr flach aufgebaut werden kann. Dabei werden beispielsweise an der einen Stirnseite die Systemadern und an der anderen Stirnseite Teilnehmeradern angeordnet. Dabei kann vorgesehen sein, dass Umlenkelemente für die Aderanschlusskontakte an beiden Stirnseiten verbunden sind oder aber nur an einer Stirnseite angeordnet sind.

Zum Anschalten der Adern werden die Adern von der Rückseite durch das jeweilige Umlenkelement zur Vorderseite geführt und von dort zu den Aderanschlusskontakten aufgeteilt und angeschlossen.

Die Erfindung wird nachfolgend anhand eines bevorzugten Ausführungsbeispiels näher erläutert. Die Fig. zeigen:
- Fig. 1: eine perspektivische Vorderansicht eines Verteilermoduls oder eines Teils eines Verteilermoduls,
- Fig. 2: eine perspektivische Draufsicht auf einen Teil des Verteilermoduls gemäß Fig. 1,
- Fig. 3: eine perspektivische Vorderansicht eines Verteilermoduls oder eines Teils eines Verteilermoduls in einer alternativen Ausführungsform und
- Fig. 4: eine perspektivische Draufsicht auf einen Teil des Verteilermoduls gemäß Fig. 3.

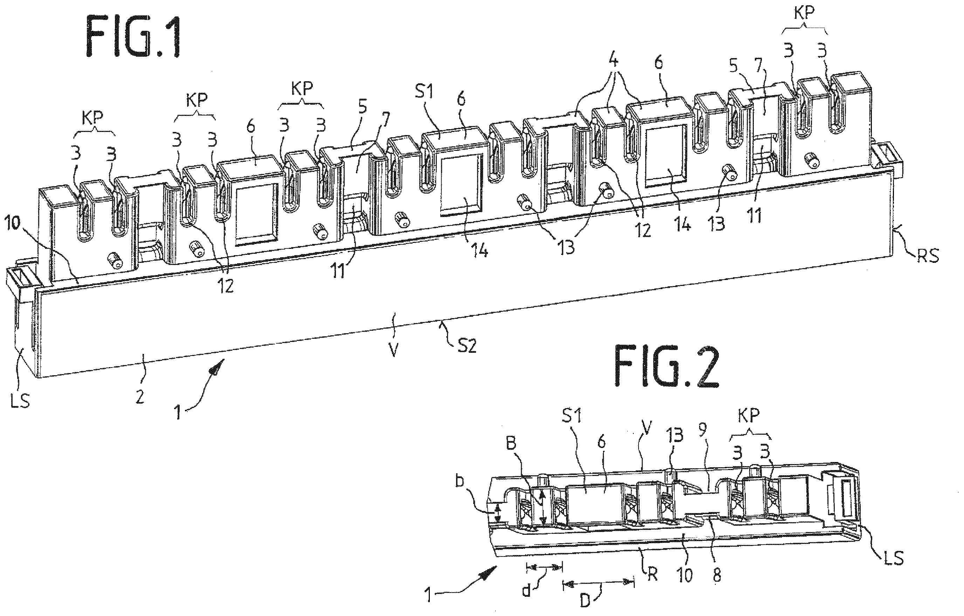

Das Verteilermodul 1 gemäß den Fig. 1 und 2 weist ein Gehäuse 2 aus Kunststoff auf, in dem Aderanschlusskontakte 3 in Form von Schneid-Klemm-Kontakten angeordnet sind, die von einer Stirnseite S1 her beschaltbar sind. Im dargestellten Ausführungsbeispiel sind sechzehn Aderanschlusskontakte 3 im Gehäuse 2 angeordnet, wobei jeweils zwei Aderanschlusskontakte 3 ein Kontaktpaar KP bilden. Dabei ist der Abstand d zwischen zwei Aderanschlusskontakten 3 eines Kontaktpaares KP kleiner als der Abstand D zwischen zwei Aderanschlusskontakten 3 verschiedener Kontaktpaare KP. Die Aderanschlusskontakte 3 liegen dabei in Schlitzen 12 zwischen zwei Domen 4. Das Gehäuse 2 weist eine Vorderseite V, eine Rückseite R, eine linke Seite LS und eine rechte Seite RS auf.

Zwischen jeweils zwei Kontaktpaaren KP liegt alternierend ein Umlenkelement 5 oder ein Trennelement 6. Das Umlenkelement 5 umfasst ein Wandelement 7, das an der Stirnseite S1 plan mit den Domen 4 abschließt. Die Breite b des Wandelements 7 ist dabei geringer als die Breite B der Dome 4, wobei das Wandelement 7 sowohl an der Vorderseite V als auch an der Rückseite R im Vergleich zu den Domen 4 zurückversetzt ist, sodass sich eine rückseitige Einbuchtung 8 und eine vorderseitige Einbuchtung 9 bilden. Dabei ist die vorderseitige Einbuchtung 9 etwas tiefer als die rückseitige Einbuchtung 8. Die Dome 4 und die Wandelemente 7 erstrecken sich dabei bis zur einen Sockelfläche 10 des Gehäuses 2. Das Umlenkelement 5 weist eine Öffnung 11 durch das Wandelement 7 auf. Die Öffnung 11 liegt dabei unterhalb der Schlitze 12 zwischen den Domen 4. Die Kanten der Öffnung 11 sind dabei abgerundet, um Knickkanten zu vermeiden. Des Weiteren sind an der Vorderseite V stiftförmige Elemente 13 angeordnet, die als Aderführung dienen. Das Trennelement 6 ist ein breiter Dom 4 zwischen zwei Aderanschlusskontakten 3 verschiedener Kontaktpaare KP, die sich auch kein Umlenkelement 5 teilen. Die Trennelemente 6 sind massiv, wobei aus spritzgusstechnischen Gründen Aussparungen 14 vorhanden sind, um Materialanhäufungen zu vermeiden. Die Aussparungen 14 können dabei sowohl von der Vorderseite V als auch von der Rückseite R in das Trennelement 6 eingebracht sein.

Die Beschaltung der Aderanschlusskontakte 3 erfolgt nun beispielsweise wie folgt. Jeweils zwei verdrillte Doppeladern kommen von oben an der Rückseite R des Verteilermoduls an und werden in den rückwärtigen Einbuchtungen 8 bis zur Öffnung 11 geführt. Die beiden Doppeladern werden (vorzugsweise immer noch verdrillt) durch die Öffnung 11 zur Vorderseite V geführt. Dort werden die beiden Doppeladern entdrillt und zu ihren jeweiligen Aderanschlusskontakten 3 geführt. Die Ader der jeweiligen Doppelader, die zu dem bezogen auf das Umlenkelement 5 weiter entfernt liegenden Aderanschlusskontakt 3 geführt wird, wird dabei unter dem stiftförmigen Element 13 geführt. Die Wirkung des Umlenkelements 5 ist dabei die einer Drahtzugsicherung. Kommt es nun zu einer Zugkraft nach oben an den ankommenden Doppeladern, wirkt die Kraft nicht unmittelbar senkrecht durch den Aderanschlusskontakt 3, sondern die senkrechte Komponente verläuft seitlich versetzt. Dabei schmiegen sich die Adern an die rückwärtige Einbuchtung 8 an.

Hierdurch wird in eine integrierte Drahtzugsicherung realisiert, die es darüber hinaus erlaubt, die Doppeladern bis kurz vor den Aderanschlusskontakt 3 verdrillt zu führen, was hinsichtlich der erreichbaren Übertragungseigenschaften vorteilhaft ist.

Weiter sei angemerkt, dass das Verteilermodul 1 auch an der der Stirnseite S1 gegenüberliegenden Stirnseite S2 mit Aderanschlusskontakten ausgebildet sein kann. Auch ist es möglich, ein Verteilermodul zu bilden, das aus zwei dargestellten Verteilermodulen 1 gebildet wird. In diesem Fall können die Aderanschlusskontakte 3 zusätzlich mit Schnittstellenkontakten, beispielsweise Gabelkontakten, ausgebildet sein, die dann miteinander elektrisch und mechanisch verbunden sind. Es ist aber auch möglich, dass über die erwähnten Schnittstellenkontakte das Verteilermodul 1 mit einer Leiterplatte verbunden wird.

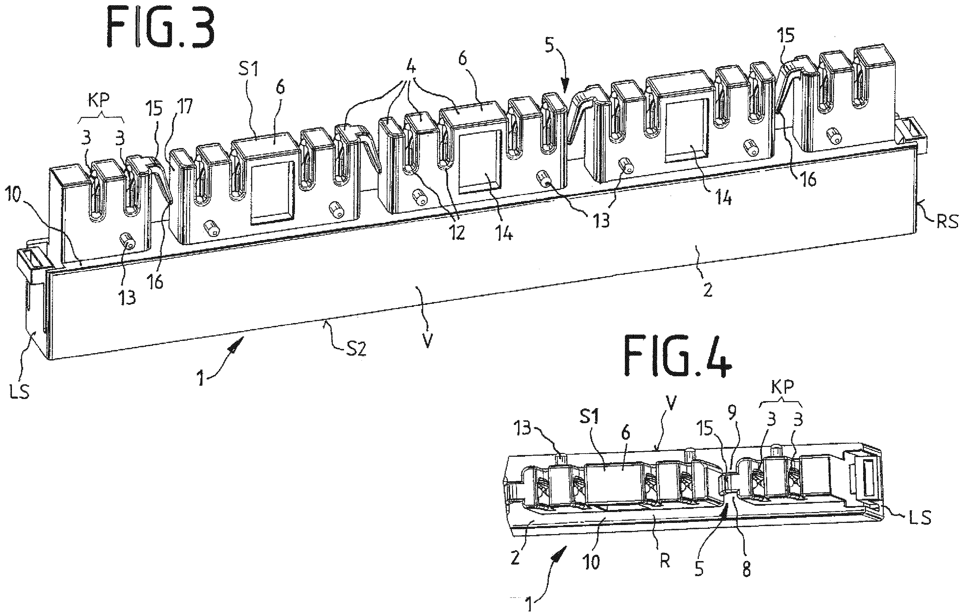

In den Fig. 3 und 4 ist eine alternative Ausführungsform für das Verteilermodul 1 dargestellt. Der einzige Unterschied besteht in der Ausbildung des Umlenkelements 5, sodass hinsichtlich der anderen Elemente vollinhaltlich auf die Ausführungen zu den Fig. 1 und 2 verwiesen werden kann. Das Umlenkelement 5 ist dabei als Bügel 15 ausgebildet. Dabei ist der Bügel 15 an einem Dom 4 an der Stirnseite S1 angebunden. Mit seinem freien Ende 16 schlägt der Bügel 15 an eine Seitenwand 17 eines benachbarten Doms 4 an, der einen Aderanschlusskontakt 3 eines benachbarten Kontaktpaares zugeordnet ist. Die Breite b des Bügels 15 ist dabei wieder kleiner als die Breite B der Dome 4, sodass sich wieder eine rückseitige Einbuchtung 8 und eine vorderseitige Einbuchtung 9 ausbilden. Der Bügel 15 ist dabei federnd, sodass das freie Ende 16 von der Seitenwand 17 weggedrückt werden kann und einen Durchlass zwischen Seitenwand 17 und freiem Ende 16 freigibt. Durch diesen Durchlass können dann die von oben kommenden Doppeladern von der Stirnseite S1 eingeführt werden. Federt dann der Bügel 15 zurück, schlägt das freie Ende 16 wieder an die Seitenwand 17 an und verschließt den Durchlass. Anschließend können die Doppeladern wie zuvor beschrieben an die ihnen zugeordneten Aderanschlusskontakte 3 geführt und angeschaltet werden. Der Vorteil dieser Ausführungsform gegenüber der gemäß Fig. 1 und 2 ist die vereinfachte Einführung der Doppeladern in das Umlenkelement 5, wobei die Ausführungsform gemäß den Fig. 1 und 2 eine höhere Stabilität aufweist, um die Zugkräfte, aber auch die Anschaltkräfte der Doppeladern aufzunehmen.

Im dargestellten Ausführungsbeispiel sind die beiden linken Bügel 15 links und die beiden rechten Bügel 15 rechts angebunden. Dies ist aber nicht zwingend.

### Bezugszeichenliste

- 1: Verteilermodul
- 2: Gehäuse
- 3: Aderanschlusskontakt
- 4: Dom
- 5: Umlenkelement
- 6: Trennelement
- 7: Wandelement
- 8: Einbuchtung
- 9: Einbuchtung
- 10: Sockelfläche
- 11: Öffnung
- 12: Schlitz
- 13: stiftförmiges Element
- 14: Aussparung
- 15: Bügel
- 16: freies Ende
- 17: Seitenwand
- d: Abstand zwischen zwei Aderanschlusskontakten eines Kontaktpaares
- D: Abstand zwischen zwei Aderanschlusskontakte verschiedener Kontaktpaare
- KP: Kontaktpaar
- LS: linke Seite
- R: Rückseite
- RS: rechte Seite
- S1: Stirnseite
- S2: Stirnseite
- V: Vorderseite

## Patentansprüche

1. Verteilermodul (1) für die Telekommunikations- und Datentechnik, umfassend ein Gehäuse (2) aus Kunststoff, in dem Aderanschlusskontakte (3) angeordnet sind, die von mindestens einer Stirnseite (S1) des Verteilermoduls (1) beschaltbar sind, wobei in das Gehäuse (2) mindestens zwei Umlenkelemente (5) als Drahtzugsicherung integriert sind, durch die Adern von einer Rückseite (R) zu einer Vorderseite (V) des Verteilermoduls (1) führbar sind, wobei die Umlenkelemente (5) zwischen den Aderanschlusskontakten (3) angeordnet sind, wobei die Aderanschlusskontakte (3) jeweils paarweise zum Anschließen einer Doppelader ein Kontaktpaar (KP) bilden, wobei jeweils zwei Kontaktpaaren (KP) ein Umlenkelement (5) zugeordnet ist.

2. Verteilermodul nach Anspruch 1, **dadurch gekennzeichnet, dass** das Umlenkelement (5) jeweils eine Öffnung (11) aufweist.

3. Verteilermodul nach Anspruch 1, **dadurch gekennzeichnet, dass** das Umlenkelement (5) als Bügel (15) ausgebildet ist.

4. Verteilermodul nach einem der vorangegangenen Ansprüche, **dadurch gekennzeichnet, dass** das Umlenkelement (5) eine geringere Breite (b) als ein benachbarter Dom (4) eines Aderanschlusskontaktes (3) aufweist.

5. Verteilermodul nach einem der vorangegangenen Ansprüche, **dadurch gekennzeichnet, dass** die Aderanschlusskontakte (3) verschiedener Kontaktpaare (KP) einen größeren Abstand (D) von einander aufweisen als die Aderanschlusskontakte (3) eines Kontaktpaares (KP).

6. Verteilermodul nach einem der vorangegangenen Ansprüche, **dadurch gekennzeichnet, dass** an der Vorderseite (V) stiftförmige Elemente (13) angeordnet sind.

7. Verteilermodul nach einem der vorangegangenen Ansprüche, **dadurch gekennzeichnet, dass** das Verteilermodul (1) an sich jeweils gegenüberliegenden Stirnseiten (S1, S2) Aderanschlusskontakte (3) aufweist.

8. Verfahren zum Anschließen von Adern an ein Verteilermodul (1) nach Anspruch 1, **dadurch gekennzeichnet, dass** die Adern von der Rückseite (R) durch das Umlenkelement (5) zur Vorderseite (V) geführt werden und dort zu den Aderanschlusskontakten (3) aufgeteilt und angeschlossen werden.

## Claims

1. A distributor module (1) for telecommunications and data equipment, comprising a housing (2) made of plastic, in which are arranged core connecting contacts (3) which can be connected from at least one face (S1) of the distributor module (1), wherein at least two deflector elements (5) for wire strain relief, through which cores can be fed from a rear (R) to a front (V) of the distributor module (1), are integrated into the housing (2), wherein the deflector elements (5) are arranged between the core connecting contacts (3), wherein pairs of core connecting contacts (3) in each case form a pair of contacts (KP) for connecting a pair of cores, wherein a deflector element (5) is associated with two pairs of contacts (KP) in each case.

2. The distributor module as claimed in claim 1, wherein the deflector element (5) has an opening (11) in each case.

3. The distributor module as claimed in claim 1, wherein the deflector element (5) is in the form of a clip (15).

4. The distributor module as claimed in one of the preceding claims, wherein the width (b) of the deflector element (5) is less than an adjacent dome (4) of a core connecting contact (3).

5. The distributor module as claimed in one of the preceding claims, wherein the core connecting contacts (3) of some pairs of contacts (KP) have a larger spacing (D) from one another than the core connecting contacts (3) of one pair of contacts (KP).

6. The distributor module as claimed in one of the preceding claims, wherein pin-shaped elements (13) are arranged on the front (V).

7. The distributor module as claimed in one of the preceding claims, wherein the distributor module (1) has core connecting contacts (3) on mutually opposing faces (S1, S2).

8. A method for connecting cores to a distributor module (1) as claimed in claim 1, wherein the cores are fed through the deflector element (5) from the rear (R) to the front (V) and from there separated and connected to the core connecting contacts (3).

## Revendications

1. Module de distribution (1) destiné aux techniques des télécommunications et des données, comprenant un boitier (2) en matière plastique dans lequel sont disposés des contacts de raccordement de brins (3) qui peuvent être connectés à partir d'au moins une face frontale (S1) du module de distribution (1), dans lequel au moins deux éléments de déviation (5) sous forme d'organes de sécurisation anti-traction des brins sont intégrés dans le boitier (2), par lesquels les brins de la face arrière (R) peuvent être menés vers une face avant (V) du module de distribution (1), dans lequel les éléments de déviation (5) sont disposés entre les contacts de raccordement des brins (3), dans lequel les contacts de raccordement des brins (3) forment respectivement par paires une paire de contact (KP) pour le raccordement d'un brin double, dans lequel un élément de déviation (5) est respectivement associé à deux paires de contacts (KP).

2. Module de distribution selon la revendication 1, **caractérisé en ce que** l'élément de déviation (5) présente respectivement un orifice (11).

3. Module de distribution selon la revendication 1, **caractérisé en ce que** l'élément de déviation (5) est conçu sous forme d'un étrier (15).

4. Module de distribution selon l'une des revendications précédentes, **caractérisé en ce que** l'élément de déviation (5) présente une largeur (b) plus petite qu'un dôme (4) voisin d'un contact de raccordement de brins (3).

5. Module de distribution selon l'une des revendications précédentes, **caractérisé en ce que** les contacts de raccordement des brins (3) de diverses paires de contact (KP) présentent une distance (D) entre eux plus importante que les contacts de raccordement de brins (3) d'une paire de contact.

6. Module de distribution selon l'une des revendications précédentes, **caractérisé en ce que** des éléments (13) en forme de stylets sont disposés sur la face avant (V).

7. Module de distribution selon l'une des revendications précédentes, **caractérisé en ce que** le module de distribution (1) présente des contacts de raccordement de brins (3) au niveau de ses faces frontales (S1, S2) respectivement opposées.

8. Procédé de raccordement de brins à un module de distribution (1) selon la revendication 1, **caractérisé en ce que** les brins sont menés de la face arrière (R) à travers l'élément de déviation (5) jusqu'à la face avant (V) et y sont divisés et raccordés aux contacts de raccordement de brins (3).
